# DEMANDE DE BREVET EUROPEEN

(11) **EP 1 809 034 A1**
(43) Date de publication de la demande: **18.07.2007**
(21) Numéro de dépôt: 07000942.8
(22) Date de dépôt: 17.01.2007
(51) Int. Cl.: H04N 7/16, H04H 1/00

(54) **Procédé de gestion d'informations de services par un appareil de réception de services numériques et appareil implémentant le procédé**

(30) Priorité: 17.01.2006 FR 0600412
(71) Demandeur: Sagem Communication S.A., 75015 Paris (FR)
(72) Inventeur: Pecqueur, Rémi, 92800 Puteaux (FR); Robinet, Nicolas, 92150 Suresnes (FR)
(74) Mandataire: Maillet, Alain

(57) **Abrégé**

Le but de l'invention est de proposer un mécanisme permettant à des terminaux mobiles de réception de services numériques d'acquérir des informations sur les services qui leurs sont proposés. Dans un mode particulier de réalisation de l'invention, le terminal possède des moyens pour acquérir des tables de description de flux de services complémentaires des tables transmises de manière standard dans les flux. Ces tables complémentaires permettent au terminal de découvrir des services complémentaires, par exemple locaux, qui lui sont offerts.

## Description

### Domaine technique

La présente invention concerne un procédé de gestion de la découverte de réseaux par un appareil mobile de réception de services numériques offerts par de tels réseaux, un tel appareil mobile de réception de services numériques ainsi qu'une structure de donnée de référencement d'un tel réseau.

### Art antérieur

L'augmentation récente des demandes pour l'accès à la télévision numérique a amené la communauté scientifique à développer un système de diffusion hertzien de télévision numérique : le système DVB-T (Digital Video Broadcasting Terrestrial : télévision numérique terrestre). Le système DVB-T, défini, entre autres, par les standards ETSI EN 300 744 « Digital Video Broadcasting (DVB) ; Framing structure, channel coding and modulation for digital terrestrial television. (DVB-T) », ETSI EN 300 468 « Digital Video Broadcasting (DVB); Specification for Service Information (SI) in DVB systems. DVB-SI », est une technologie qui consiste à transmettre des flux de données numériques, telles que des données audio visuelles de type télévision qui peuvent être associées à des données numériques interactives du même type que celui qui est transmis par un satellite mais via les réseaux hertziens existants à antennes. Ces flux de données numériques permettent le transport d'un ou plusieurs services numériques, un service numérique étant lui-même constitué d'un ou plusieurs flux élémentaires, contenant généralement au moins un flux vidéo et un flux audio, destinés à être décodés et restitués par un terminal, par exemple un téléviseur.

Bien qu'un tel système de transmission de données ait prouvé sa capacité à servir des terminaux fixes et portables, il a été ensuite adapté pour permettre à des terminaux ayant des capacités de traitement et des ressources limitées ainsi que des contraintes d'utilisation particulières d'accéder à ce type de flux de services. Cette adaptation a donné lieu au système normalisé dit DVB-H (Digital Video Broadcast-Handheld) défini par le standard ETSI EN 302 304 : « Digital Video Broadcasting (DVB); Transmission System for Handheld Terminals (DVB-H) ». Cette norme vise à permettre la diffusion de flux de services multimédias sur des terminaux mobiles qui, comme les téléphones mobiles, doivent répondre à des exigences spécifiques en terme de consommation de courant, de taille d'écran et de mobilité. Selon la norme DVB=H, les services transportés au sein d'un flux sont codés et multiplexés sur la base de la technologie MPEG-2 (Moving Picture Experts Group) système, standard ISO/IEC 13818, de manière à permettre le transport simultané de plusieurs services au sein d'un même flux de données. Chaque flux élémentaire de chaque service est encodé puis découpé en paquets de données, les paquets des différents flux élémentaires étant ensuite mélangés dans le flux de transport.

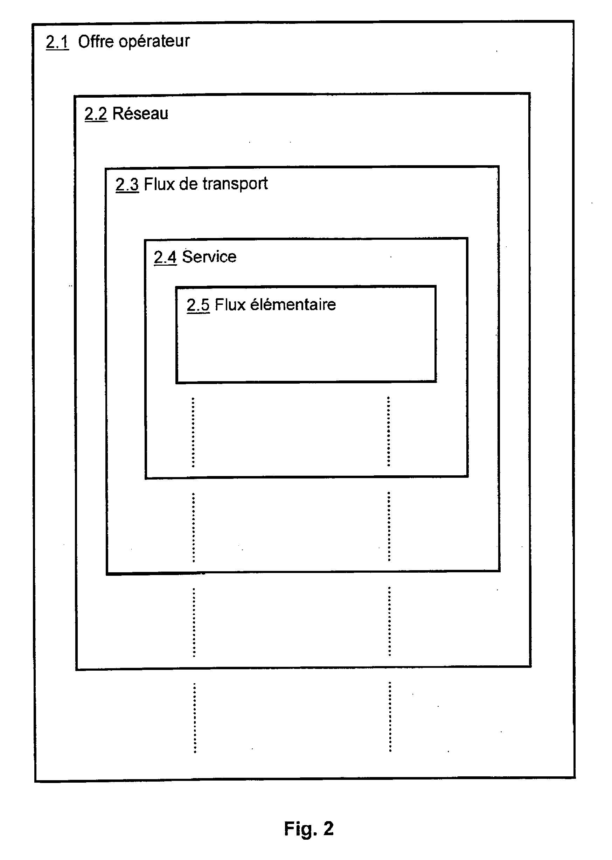

La figure 2 illustre la hiérarchie d'une offre DVB. Un opérateur de distribution de services multimédia, référencé 2.1, va distribuer ses services via un ou plusieurs réseaux de distribution, référencé 2.2,. Ces réseaux regroupent un ensemble de flux de transport, référencés 2.3, diffusés via un même système de diffusion, par exemple câble, satellite ou autre. Chaque flux de transport 2.3 comporte un ou plusieurs services, référencés 2.4, chacun de ces services étant composé d'un ou plusieurs flux élémentaires, référencés 2.5.

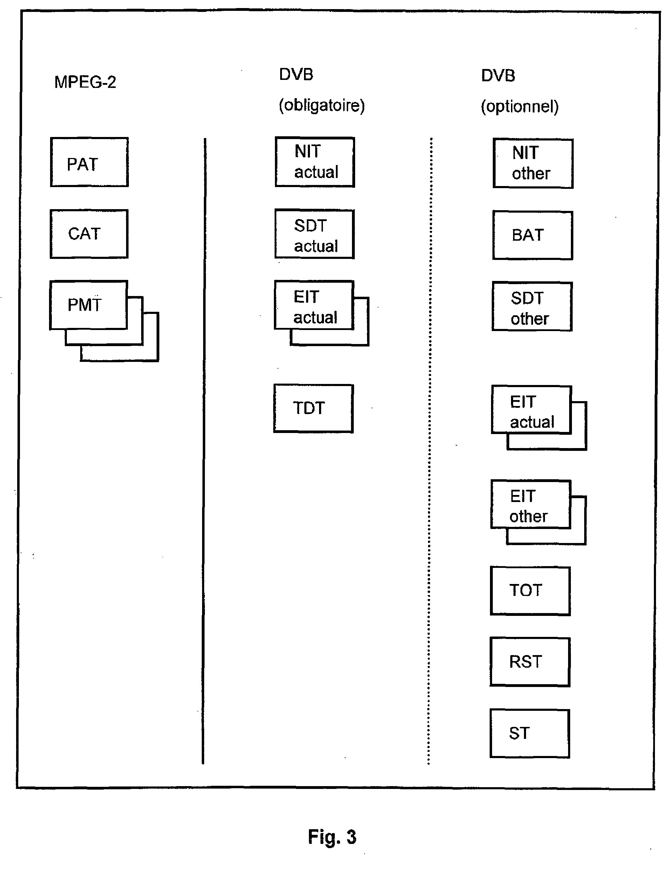

Outre les services, un flux DVB transporte également des tables de signalisation. Ces tables ont pour fonction de décrire le système de diffusion, le contenu et la programmation des services. Cet ensemble de tables est représenté Fig. 3. On retrouve un premier ensemble de tables obligatoires définies par le standard MPEG-2 comprenant la PAT (Program Association Table) qui contient la liste de tous les services du flux ainsi que les identifiants de la, ou des, PMT (Program Map Table) et de la NIT (Network Information Table). La ou les PMTs contiennent les identifiants respectifs de chaque service. La CAT (Conditionnal Access Table) contient des informations privées relatives à l'accès conditionnel.

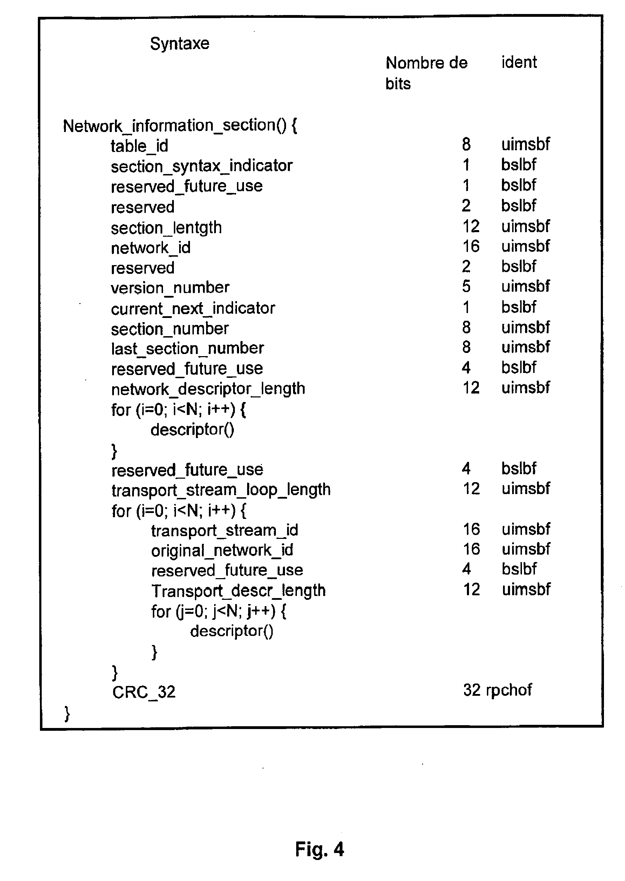

Outre ces tables définies dans MPEG-2, un flux de transport DVB contient un ensemble de tables définies par DVB pour fournir des informations à destination de l'utilisateur pour lui permettre de choisir un service. Parmi ces tables, certaines sont obligatoires tandis que d'autres sont optionnelles. La table principale est la NIT (Network Information Table) qui contient des données privées sur le système de transmission. La NIT, dont la structure est décrite Fig. 4, va contenir en particulier toutes les données permettant à un terminal de recevoir le flux de transport. Dans le cas d'un flux transmis par satellite, il s'agit de la position orbitale, du numéro de transpondeur, de la fréquence, de la modulation etc. Dans le cas d'une transmission hertzienne, il va s'agir de la fréquence, et de la modulation entre autres. Outre la NIT décrivant le flux transmis associé et transmise obligatoirement, d'autres NITs, appelées NIT_other, peuvent, de manière optionnelle, être incluses pour décrire d'autres flux de transport du réseau servant à transporter chacun un ensemble de services. Ces NIT_other se différencient de la NIT_actual décrivant les services du flux courant par leur identificateur de table. Une NIT_actual a un identificateur de table de 0x40 tandis qu'une NIT_other a un identificateur de table 0x41.

Outre la NIT, DVB définit les tables suivantes:
- SDT (Service Description Table) qui regroupe des informations sur les services, SDT_actual pour les services du flux courant et SDT_other pour les services d'autres flux,
- EIT (Event Information Table) qui donne des informations sur les évènements, leur heure de début, leur durée, des informations sur l'évènement courant, le suivant et optionnellement des évènements futurs, de même EIT_actual pour les évènements du flux courant et EIT_other pour les évènements d'autres flux,
- TDT (Time and Date Table) donne la date et l'heure courante,
- BAT (Bouquet Association Table) donne des informations sur le bouquet, c'est-à-dire l'ensemble des services distribués par un même opérateur éventuellement sur plusieurs réseaux,
- TOT (Time Offset Table) qui donne la différence entre le temps local et le temps UTC,
- ST (Stuffing Table) qui peut invalider des sections existant à la frontière d'un système de diffusion (ensemble des sections devenues invalides),
- RST (Running Status Table) qui donne le statut d'un évènement.

Dans le cadre de la diffusion de services DVB par voie hertzienne (DVB-T, DVB-H), le problème se pose pour un terminal de connaître les services auxquels il a accès. Une première méthode consiste à effectuer un balayage des fréquences pour identifier celles qui sont utilisées pour la diffusion d'un flux de transport DVB. Une fois ce flux identifié, un décodage des tables de signalisation permet de construire la liste des services offerts au sein de ce flux. A l'issue du balayage, le terminal est donc à même de présenter à l'utilisateur une liste des services disponibles.

Une autre façon de faire est d'exploiter les informations contenues dans la, ou les, NITs contenues dans les flux. Pour ce faire, le terminal part d'une ou plusieurs NITs de départ. Il analyse cette, ou ces, NITs, en extrait la localisation, c'est-à-dire la fréquence principalement, des flux contenus dans ces NITs. Il tente alors de trouver ces flux en utilisant ces données de localisation. Lorsqu'il trouve un flux disponible à la localisation donnée, il construit la liste des services proposés dans ce flux en fonction des informations contenues dans les tables SI/PSI dudit flux. Il charge et analyse aussi les NITs qu'il trouve dans le flux. De cette manière, de proche en proche, par l'analyse des NITs dont il dispose et des NITs qu'il trouve dans les flux, il est à même de dresser une liste de services disponibles sans avoir à effectuer de balayage des fréquences. Pour initialiser ce processus le terminal doit posséder une ou plusieurs NIT initiales lui indiquant la localisation d'au moins un premier flux. Cette NIT initiale peut être configurée dans l'appareil lors de la fabrication. Il est également possible de mémoriser une ou plusieurs NIT lors d'une utilisation, ces NIT mémorisées pouvant servir de NIT de départ lors d'utilisations ultérieures. Dans le cas où un terminal se trouve dépourvu de NIT de départ, il est toujours possible de commencer une phase de balayage jusqu'à trouver un premier flux puis de partir des NITs contenues dans ce premier flux trouvé.

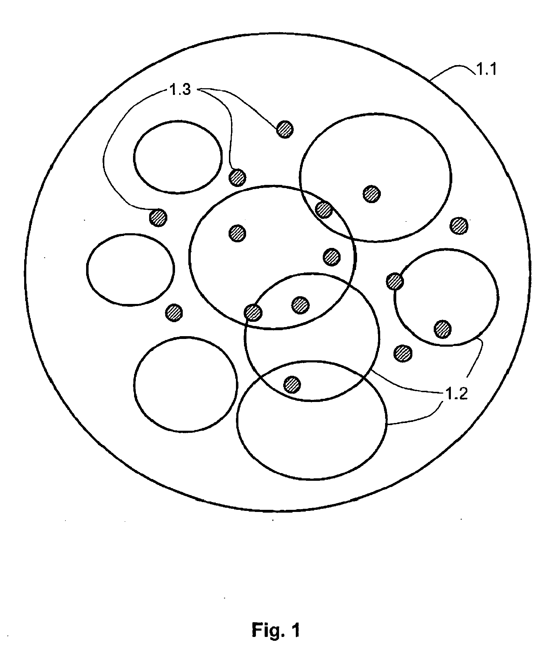

La diffusion de services DVB à destination de terminaux mobiles, tels que des téléphones, présente des caractéristiques particulières ayant des incidences sur ces politiques de découverte des services. En effet, la généralisation de ces techniques ouvre la voie à une utilisation plus générale de la diffusion de services DVB. Actuellement cette diffusion est généralement une diffusion à large échelle, mais elle pourrait se compléter dans un avenir proche d'une multitude de diffusions locales. La Fig. 1 illustre cette situation où une diffusion de services à l'échelon national, référencée 1.1, coexiste avec une pluralité de diffusions de services régionaux, référencés 1.2, et également avec une multitude de diffusions de services locaux, référencées 1.3. Ces diffusions locales peuvent être liées, par exemple, à un magasin, une université, un musée. Dans ce contexte, un terminal mobile est susceptible de voir son environnement de diffusion, c'est-à-dire les flux disponibles, évoluer lors de ses déplacements. Les diffusions nationales sont relativement stables, tandis que les diffusions régionales évoluent lors de déplacements conséquents et que les diffusions locales disponibles changent très fréquemment.

Dans ce contexte, les méthodes de découverte des flux disponibles posent des problèmes. Un terminal mobile désirant connaître à tout instant la liste des flux disponibles se voit obligé, par la première méthode, de faire des balayages incessants des fréquences à la recherche de nouveaux flux, ce qui se révèle coûteux en ressources, mobilisation du module de réception radio et épuisement rapide des réserves énergétiques. D'un autre côté, un fonctionnement correct de la seconde méthode suppose que par analyse des NITs il est possible de tracer une carte complète des flux disponibles. Cela exige que les flux transportent des NITs décrivant tous les flux disponibles. Cette hypothèse tend déjà à ne pas se vérifier en présence d'une offre limitée à quelques réseaux, généralement nationaux. La couverture exhaustive de tous les services régionaux et locaux demande l'inclusion de très nombreuses tables dans tous les flux. Cette inclusion est gourmande en bande passante et elle exige de plus une étroite collaboration de la part de tous les opérateurs offrant des services DVB ce qui devient de plus en plus difficile à imaginer dans un contexte de multiplication de l'offre.

### Exposé de l'invention

Le but de l'invention est de proposer un mécanisme permettant à des terminaux mobiles de réception de services numériques d'acquérir des informations sur les services qui leurs sont proposés.

Dans un mode particulier de réalisation de l'invention, le terminal possède des moyens pour acquérir des tables de description de flux de services complémentaires des tables transmises de manière standard dans les flux. Ces tables complémentaires permettent au terminal de découvrir des services complémentaires, par exemple locaux, qui lui sont offerts.

L'invention concerne un procédé de gestion d'une offre de services numériques au sein d'un terminal de réception de services numériques diffusés via des flux de données numériques, ledit flux de données numériques comprenant un canal dédié de diffusion de tables de description de services offerts, ces services décrits pouvant être diffusés au sein dudit flux ou au sein d'autres flux diffusés, comportant les étapes suivantes :
- une étape de réception d'au moins une table complémentaire de description de services offerts reçue via un canal complémentaire différent dudit canal dédié de diffusion de tables de description de services offerts ;
- une étape de construction de la liste des services offerts incluant des informations contenues dans ladite table complémentaire de description de services offerts.

L'utilisation d'un tel canal complémentaire apporte de la souplesse dans le processus de distribution de tables décrivant des services à un appareil mobile, en particulier pour des services locaux.

Selon un mode de réalisation particulier de l'invention le procédé comprend en outre une étape de réception d'au moins une table de description de services offerts reçue par le canal dédié où l'étape de construction de la liste des services offerts inclut des informations contenues dans cette table et des informations contenues dans ladite table complémentaire de description de services offerts.

De cette façon, il est possible de mixer de l'information sur les services reçue de manière traditionnelle et l'information reçue via les canaux complémentaires.

Selon un mode de réalisation particulier de l'invention le canal complémentaire comprend un canal du flux dédié au transfert de données.

L'utilisation d'un tel canal permet de maîtriser la fréquence d'envoi des données.

Selon un mode de réalisation particulier de l'invention le canal complémentaire comprend un canal de données d'un réseau de téléphonie mobile.

Selon un mode de réalisation particulier de l'invention le canal complémentaire comprend un périphérique de stockage de données connecté au terminal.

Selon un mode de réalisation particulier de l'invention le canal complémentaire comprend un canal de connexion point à point avec un autre appareil.

Selon un mode de réalisation particulier de l'invention le canal complémentaire comprend la lecture de ladite table complémentaire au sein d'un marqueur extérieur par un dispositif lecteur incorporé et/ou connecté au terminal.

L'invention concerne également un terminal de réception de services numériques diffusés via des flux de données numériques comportant :
- des moyens de réception desdits flux de données numériques, ces flux comprenant un canal dédié à la transmission de tables de description de services offerts, ces services offerts décrits pouvant être diffusés au sein dudit flux ou au sein d'autres flux diffusés,
- des moyens de construire, à partir de tables de description de services offerts, une liste des services offerts;
- des moyens de recevoir, via un canal différent dudit canal dédié compris dans le flux, des tables complémentaires de description de services offerts, et
- des moyens de construire une liste des services offerts sont adaptés pour utiliser lesdites tables complémentaires.

L'invention concerne également un système de diffusion de services numériques via des flux de données numériques à destination d'un terminal de réception de services numériques, lesdits flux de données numériques comprenant un canal dédié à la transmission de tables de description des services offerts, ces services décrits pouvant être diffusés au sein dudit flux ou au sein d'autres flux diffusés, le système comprenant en outre des moyens de transmettre à destination dudit terminal de réception de services numériques des tables complémentaires de description de services offerts via un canal différent du canal dédié à la transmission de tables de description.

L'invention concerne également une table de description de services numériques diffusés via des flux de données numériques, destinée à être interprétée par un terminal de réception de services numériques, caractérisée en ce qu'elle contient une information relative au canal de transmission utilisé pour sa transmission au terminal de réception.

### Brève description des dessins

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
La Fig. 1 représente le schéma d'un exemple de couverture de services.
La Fig. 2 représente le schéma d'une offre DVB.
La Fig. 3 représente les principales tables de signalisation présentes dans un flux DVB.
La Fig. 4 représente la structure d'une NIT dans le système DVB.
La Fig. 5 représente l'architecture d'un exemple de terminal de réception de services numériques connu dans l'état de la technique.
La Fig. 6 représente l'architecture d'un premier mode de réalisation de l'invention où les tables complémentaires sont transmises via un canal de données.
La Fig. 7 représente l'architecture d'un mode de réalisation de l'invention où les tables complémentaires sont transmises via un réseau d'échange de données différent du canal de réception des services.
La Fig. 8 représente l'architecture d'un mode de réalisation de l'invention où les tables complémentaires sont transmises via un périphérique du terminal de réception.
La Fig. 9 représente un exemple de descripteur de système de diffusion de services numériques, ici le descripteur d'un système de diffusion par câble.
La Fig. 10 représente un exemple de descripteur selon l'invention pouvant être inclus dans une table complémentaire reçue par un autre canal que le système de diffusion des services.
La Fig. 11 illustre la gestion de la mise à jour des tables en présence de tables complémentaires stockées dans la carte SIM selon un mode de réalisation de l'invention.
La Fig. 12 illustre la gestion de la mise à jour des tables en présence de tables complémentaires reçues dans un magasin selon un mode de réalisation de l'invention.
La Fig. 13 illustre la réception de tables via un émetteur RFID.

### Exposé détaillé de l'invention

Les exemples de réalisation de l'invention qui vont être maintenant décrits utilisent la diffusion de services numériques suivant la norme DVB. Mais l'invention ne se réduit pas à DVB et l'homme du métier comprendra que l'invention est susceptible de s'appliquer à toute norme de diffusion de services numériques comme ATSC (Advanced Television Systems Committee) ou autres.

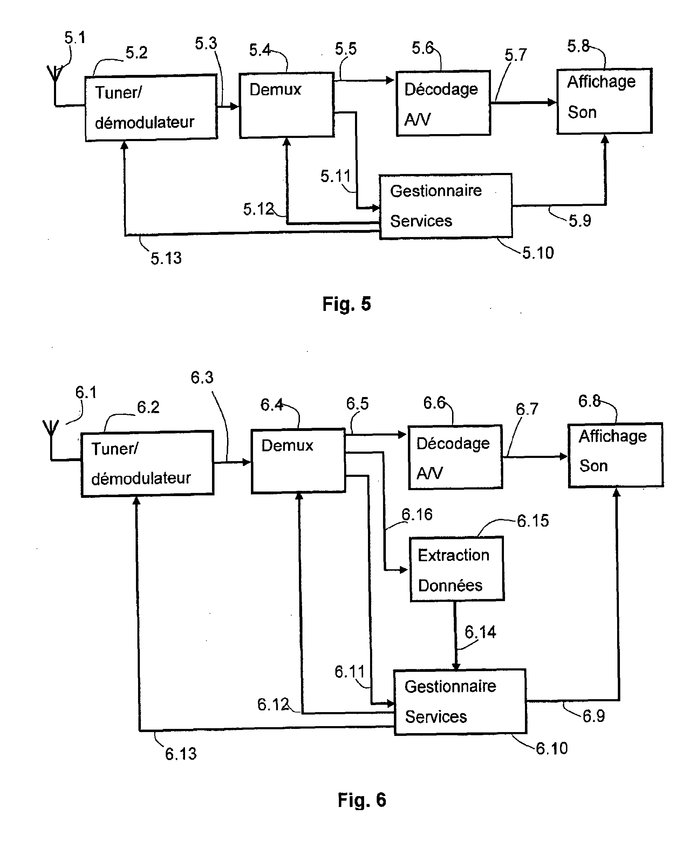

La Fig. 5 représente l'architecture d'un exemple de terminal de réception de services numériques tel qu'il est connu dans l'état de la technique. L'exemple représenté est adapté à la réception des services via un canal hertzien. Il est donc doté d'une antenne 5.1, permettant la réception de signaux de radio fréquence. Cette antenne est connectée à un module de réception 5.2, couramment appelé « tuner/démodulateur » par l'homme du métier. C'est ce tuner qui permet de sélectionner une fréquence donnée et de recevoir les signaux transmis sur cette fréquence. Le démodulateur lui récupère le signal analogique et en sortie 5.2, nous avons un flux de données numériques 5.3, et appelé flux de transport. Ce flux est constitué d'un ensemble de paquets de données élémentaires. Ce flux de transport est généralement constitué d'un ou plusieurs services, ainsi que d'informations de signalisation transmises sous la forme de tables émises périodiquement dans le flux. Le flux de transport est ensuite traité par un module de démultiplexage 5.4, appelé « démux ». C'est ce module qui est chargé d'isoler dans le flux de transport les services désirés. Il permet, par exemple, d'isoler les flux élémentaires 5.5, généralement audio et vidéo, qui sont ensuite décodés par un module de décodage 5.6 pour former des signaux analogiques 5.7 propres à être restitués par un module d'interface homme machine 5.8. Ce module d'interface homme machine contient typiquement un écran et des haut-parleurs. Le module de démultiplexage 5.4 permet également d'isoler les tables de signalisation 5.11 qui sont traitées par un module de gestion des services. Ce module interprète les tables reçues, et en particulier la NIT, pour construire la liste des services disponibles. Cette liste de services 5.9 peut être affichée par le module d'interface homme machine 5.8 à la demande de l'utilisateur afin de lui permettre de choisir le service qu'il désire regarder. Quand l'utilisateur choisit un service, le gestionnaire de service programme adéquatement le module de réception 5.2 et le module de démultiplexage 5.4 en fonction des informations de localisation associées au service sélectionné et contenues dans les tables 5.11. En particulier, le gestionnaire de services programme le module de réception sur la fréquence utilisée pour la diffusion du flux de transport contenant le service. Il programme également le module de démultiplexage avec les identificateurs des flux élémentaires, généralement audio et vidéo, composant le service désiré en vue de son décodage puis de son affichage par le terminal.

Nous avons vu que, dans le contexte où les services offerts sont abondants et où le terminal est mobile, il devient difficile pour celui-ci de maintenir une liste de services disponibles en fonction de ses déplacements. En effet, il est peu probable qu'il trouve dans les tables de signalisation d'un flux donné les informations relatives à la totalité de l'offre de services accessibles tant nationale que régionale et surtout locale. Un balayage de toutes les fréquences pour détecter tous les flux disponibles doit être effectué à une fréquence relativement rapide quand le terminal se déplace pour tenir compte de l'évolution de l'offre. Il faut découvrir les nouveaux services accessibles quand le terminal entre dans leur zone de diffusion et ne plus présenter ceux qui disparaissent quand le terminal quitte leur zone de diffusion. Un tel balayage des fréquences effectué devrait donc être effectué de façon quasi permanente. Ceci est difficilement envisageable car il monopolise le module de réception (tuner). De plus ces terminaux portables sont généralement alimentés par batterie et le balayage est coûteux en énergie.

Pour ce faire, il est prévu, selon l'invention, de transmettre au terminal, outre les tables normalement contenues dans les flux et transmises via un canal dédié au transport de ces tables dans ce flux, des tables complémentaires contenant des informations sur des services disponibles. Dans l'exemple de DVB, ce canal dédié est le canal des tables SI/PSI. Ces tables complémentaires sont transmises par un canal différent du canal dédié au transport de ces tables présent dans le flux. Ces tables complémentaires pourront être, par exemple, distribuées par les opérateurs de ces services par des canaux divers appropriés. On peut prévoir que certains opérateurs mettent à disposition les tables décrivant leurs services sur Internet et que l'utilisateur puisse les récupérer et les transmettre à son terminal via, par exemple, un périphérique USB ou une carte mémoire lisible par le terminal comme une carte de mémoire flash. La communication des tables peut encore se faire par une liaison point à point entre un ordinateur et le terminal comme une liaison Bluetooth, série etc. Il est également possible, si le terminal est doté de moyens d'accès à un réseau de données comme par exemple un réseau de téléphones mobiles tel que GSM, GPRS ou UMTS connecté à l'Internet, que le terminal puisse récupérer ces tables sur ledit réseau de données. Ces tables complémentaires peuvent également être transmises au terminal par l'opérateur principal du terminal, suite à des accords commerciaux, par des moyens à la disposition de cet opérateur. Dans ce cadre, on peut citer l'exemple d'un opérateur de téléphonie fournissant à ses clients, via la carte SIM du téléphone, des tables complémentaires concernant des offres de services DVB à destination de téléphones ayant des moyens de réception de tels services. Un opérateur de services DVB peut également rendre disponible des tables complémentaires via le canal de données ou carrousel, prévu par DVB pour la transmission de fichiers tels que des applications interactives. Il est aussi possible pour une institution locale diffusant des services DVB comme un magasin, une école, une mairie, de prévoir une diffusion directe des tables sur ses services locaux aux terminaux entrant dans la zone de diffusion desdits services. Par exemple un magasin peut doter les portes d'entrée dans le magasin d'émetteurs RFID (Radio Frequency Identification) pouvant être reçus par les terminaux compatibles lorsque leur porteur entre dans le magasin. Certains de ces modes de réalisation vont maintenant être décrits plus en détails. Tous ces divers moyens visent à transmettre au terminal la connaissance d'offres de services numériques complémentaires via des tables complémentaires telles que des NITs complémentaires. De cette façon le terminal peut découvrir des services qu'il n'aurait autrement pu découvrir qu'au prix d'un balayage de fréquences.

Dans tous les modes de réalisation ci-dessous, le principe est de présenter au module de gestion de service (celui qui identifie, récupère, et analyse les tables SI/PSI) toutes les tables. C'est à dire que tous les moyens qui ont été évoqués permettent l'envoi des tables telles quelles à ce module.

Un premier mode de réalisation de l'invention est illustré Fig. 6. La norme DVB définit plusieurs moyens de transmettre des données en sus des services et des tables de signalisation associées. En particulier, il est possible d'utiliser un canal de données appelé « object carrousel » en anglais. Ce canal de données permet de transmettre périodiquement différents objets comme des dossiers, des fichiers et autres. Ces données sont transmises sous la forme de paquets de données multiplexés dans le flux de transport 6.3. Le module de démultiplexage permet d'isoler ces paquets 6.16 et de les transmettre à un module d'extraction de données 6.15 qui va reconstituer les tables complémentaires 6.14 et les transmettre au module de gestion des services 6.10. De cette façon, ce module de gestion des services 6.10 est à même de proposer à l'utilisateur, en sus des services décrits dans les tables transmises dans le flux, les services décrits dans les tables complémentaires. L'avantage de transmettre les tables complémentaires sous la forme de fichiers via le canal de données est de pouvoir paramétrer la fréquence de leur transmission. Alors que les tables SI/PSI sont transmises avec une périodicité typique de l'ordre de 10 secondes, il est possible de transmettre les tables complémentaires avec une périodicité, par exemple, de l'ordre de l'heure. Ainsi, on préserve la bande passante utilisée pour la transmission de ces tables complémentaires. De plus, les diffuseurs sont libres d'utiliser toute la flexibilité de la technologie IP pour fournir des informations de description des services décrits.

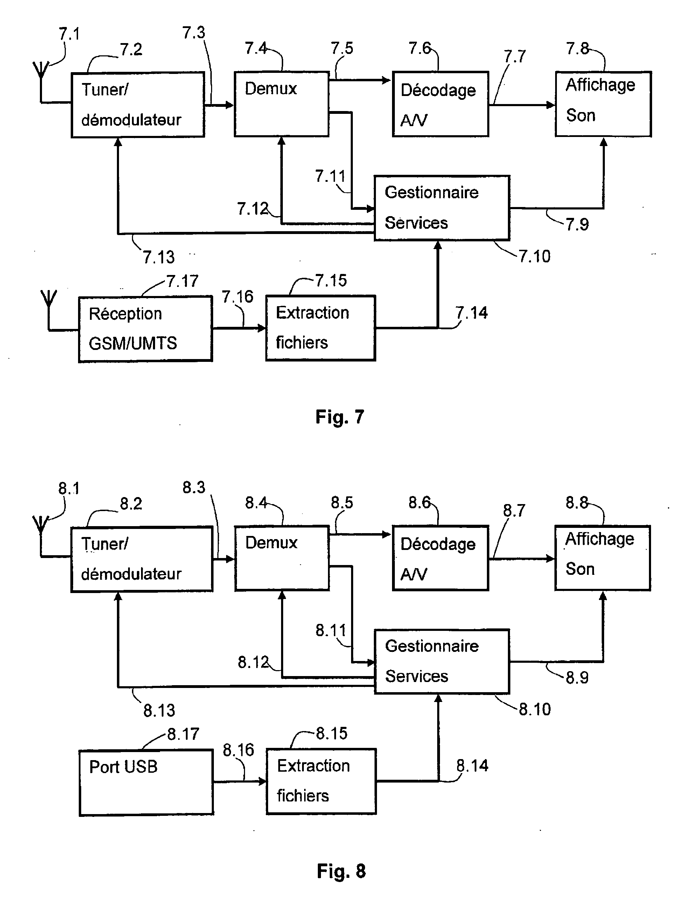

Un autre mode de réalisation d'un terminal selon l'invention est représenté Fig. 7. Dans ce mode de réalisation, le terminal est un téléphone mobile incorporant des moyens de réception et de décodage de services numériques de type DVB. La réception de ces services est une réception de type terrestre. Les téléphones mobiles possèdent généralement la capacité de se connecter en mode données grâce à des protocoles d'échange de données comme GPRS (General Packet Radio Service) ou UMTS (Universal Mobile Telecommunications System) à un réseau d'échange de données comme l'Internet ou autres. Ces protocoles d'échange de données vont permettre de transmettre au terminal des tables complémentaires de description de services. De plus, dans ce mode de réalisation, l'opérateur de téléphonic possède des informations sur la localisation du terminal. En effet, la cellule utilisée par le terminal permet de connaître le lieu de connexion. En fonction de cette information de localisation, il est donc possible pour l'opérateur de sélectionner les tables complémentaires décrivant des services couvrant la zone géographique de la cellule GSM. De cette façon, le terminal est renseigné sur les services locaux accessibles dans sa zone géographique. On peut, par exemple, fournir au terminal un lien WAP (Wireless Application Protocol) sur un ensemble de fichiers contenant une NIT plus un fichier descriptif en XML (eXtended Markup Language). Ce fichier XML donnant, entre autres, la date de validité de la table ainsi que son numéro de version. Lorsque la date de validité est dépassée ou que le numéro de version est périmé, la table est rejetée et devient non utilisable. Le terminal est ici doté d'un module de réception de téléphonie mobile, par exemple GSM/GPRS/UMTS 7.17. Via ce module, des fichiers 7.16 contenant des tables complémentaires plus éventuellement des fichiers de description en XML sont communiqués à un module d'extraction de fichiers 7.15. Ce module extrait des fichiers les tables complémentaires 7.14 qui sont transmises au gestionnaire de services 7.10. Dans des variantes de ce mode de réalisation, le terminal utilise pour se connecter au réseau d'échange de données des moyens de connexion autres que la communication GSM parmi lesquels on peut citer le Wifi, Ethernet, Bluetooth, modem, etc.

Dans un autre mode de réalisation illustré Fig. 8, le terminal dispose d'un port permettant la connexion d'un périphérique pouvant contenir des données. Le dessin décrit l'exemple d'un terminal doté d'un port USB (Universal Serial Bus) permettant de connecter au terminal, par exemple, un support de mémoire de masse. Ce support peut être un disque dur compatible USB ou la technologie très populaire de carte mémoire compatible USB et connue sous le terme courant de clé USB. L'exemple de réalisation décrit se focalise sur la technologie USB (version 1 ou 2), mais il sera évident pour l'homme du métier que ce mode de réalisation se généralise à toute technique permettant la connexion d'un périphérique contenant des données au terminal. On peut citer des technologies comme IEEE 1394, SCSI (Small Computer System Interface) ou autres. On peut également citer des technologies de connexion de périphériques sans fil, comme Bluetooth ou Wifi. Dans ce mode de réalisation, l'utilisateur pourra charger son périphérique avec des fichiers contenant des tables complémentaires qu'il aura pu trouver sur l'Internet, ou dans un magasin ou autre. Ce périphérique est connecté via le port 8.17 au terminal. Les fichiers 8.16 peuvent donc être lus par le module d'extraction de fichiers 8.15 qui transmet les tables complémentaires 8.14 au gestionnaire de services 8.10. L'utilisateur dispose dans ce cas, par exemple, d'une interface lui permettant de parcourir la mémoire du périphérique connecté pour y trouver des fichiers contenant des tables complémentaires et/ou des fichiers de description desdites tables. Une fois les fichiers en question identifiés, le module de gestion des services peut les lire, en extraire les tables et les gérer en complément des tables contenues dans le flux.

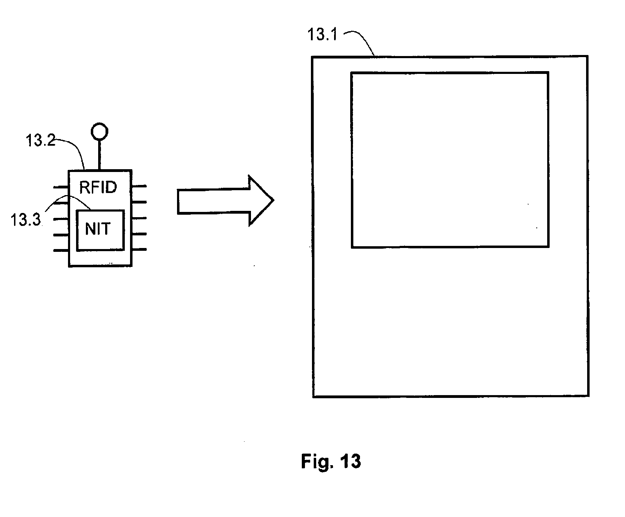

Dans un autre mode de réalisation, il est possible d'utiliser la technologie RFID (Radio Frequency Identification) pour transmettre localement des tables complémentaires à un terminal. Cette technologie est basée sur des marqueurs passifs constitués d'une puce de mémoire et d'une antenne. Ces marqueurs sont prévus pour pouvoir servir d'étiquettes électroniques et être apposés sur toute sorte d'articles. Lorsque l'article passe à proximité d'un lecteur, celui-ci l'active en lui fournissant l'énergie dont il a besoin pour émettre ses données qui peuvent alors être lues par le lecteur. Il est donc possible de charger des marqueurs RFID avec des tables complémentaires décrivant des services locaux et d'apposer ces marqueurs aux entrées d'un bâtiment où la diffusion a lieu. On peut également prévoir d'apposer ces marqueurs RFID sur des supports de publicité tels que des plaquettes de présentation des services ou des affiches. Dans ces conditions, un terminal doté de capacités à agir en lecteur RFID est à même de lire ces tables complémentaires lorsque son porteur entre dans la zone de diffusion des services décrits. L'utilisateur peut également charger les tables décrivant les services en approchant son terminal du support annonçant le service. Cette utilisation peut être prévue dans un magasin par exemple. La Fig. 13 illustre ce fonctionnement. Un marqueur 13.2 est apposé, par exemple, à l'entrée d'un magasin, et contient une table complémentaire 13.3. Lorsque l'utilisateur porteur du terminal 13.1 passe la porte, le lecteur RFID inclus dans le terminal active le marqueur et lit la table complémentaire stockée. De cette façon l'utilisateur peut prendre connaissance des services diffusés par le magasin en son sein.

Dans un autre mode de réalisation, le terminal possède des moyens de connexion point à point avec un ordinateur. Dans ce cas, l'utilisateur peut récupérer les tables complémentaires sur un service en ligne sur l'Internet, ou par exemple sur un CD ou DVD distribué par l'opérateur ou de toutes autres manières. Ensuite l'utilisateur connecte son terminal à son ordinateur, ce qui peut se faire par une liaison série, une liaison sans fil de type Bluetooth, Wifi ou autre. Il peut ensuite transférer ces tables complémentaires vers le terminal.

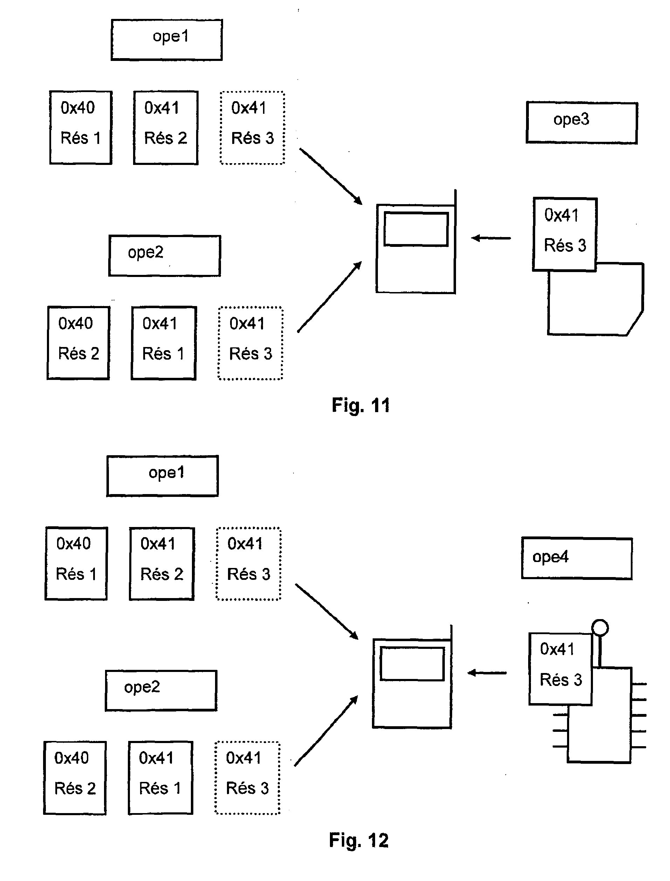

La gestion en mémoire des tables se fait, dans le cas du DVB, en utilisant le numéro de version. Ce numéro de version inclus dans les tables est un numéro entre 0 et 31. Chaque fois que l'opérateur change le contenu de la table, il incrémente le numéro de version de 1. Lorsque la valeur 31 est atteinte, on repasse à un numéro de version de 0. De cette façon, les tables étant transmises dans le flux de manière périodique, le terminal est à même de détecter un changement de version de la table et de récupérer la nouvelle version pour la stocker en lieu et place de la version précédente. Dans un contexte classique, il ne doit pas y avoir de conflit entre une table DVB T/H et une table d'une autre provenance que le DVB T/H. Car la table ainsi fournit aura un NetworkID différent. Par exemple TPS aura toujours un NetworkID = 0xB0 et on peut imaginer un opérateur Orange avec un NetworkID = 0xD3. Si orange fournit une table, elle sera complémentaire à TPS. Néanmoins, la situation est un peu différente lorsque les tables peuvent être transmises au terminal par plusieurs canaux différents avec le même NetworkID. Il faut donc gérer la situation où une même sous-table est transmise par plusieurs canaux à la fois. Il n'est plus possible de se baser sur une cohérence peu probable entre les numéros de version des tables issues des différents canaux. Une telle situation est illustrée Fig. 11. Sur ce dessin on peut voir un système ou un terminal, ici un téléphone mobile, recevoir deux offres classiques de la part de deux opérateurs classiques, ope1 et ope2. En outre, le terminal possède une table complémentaire, ici une NIT other, transmise via la carte SIM de l'opérateur de téléphonie mobile ope3 et décrivant un réseau Rés 3. Dans le cas où une version de cette même table se retrouve distribuée de manière classique par l'un des opérateurs ope1 ou ope2, il faut gérer le conflit entre la table transmise via la carte SIM et la table transmise dans le flux. La détection de l'origine d'une table donnée, sa nature de table complémentaire peut aider le terminal à gérer le conflit.

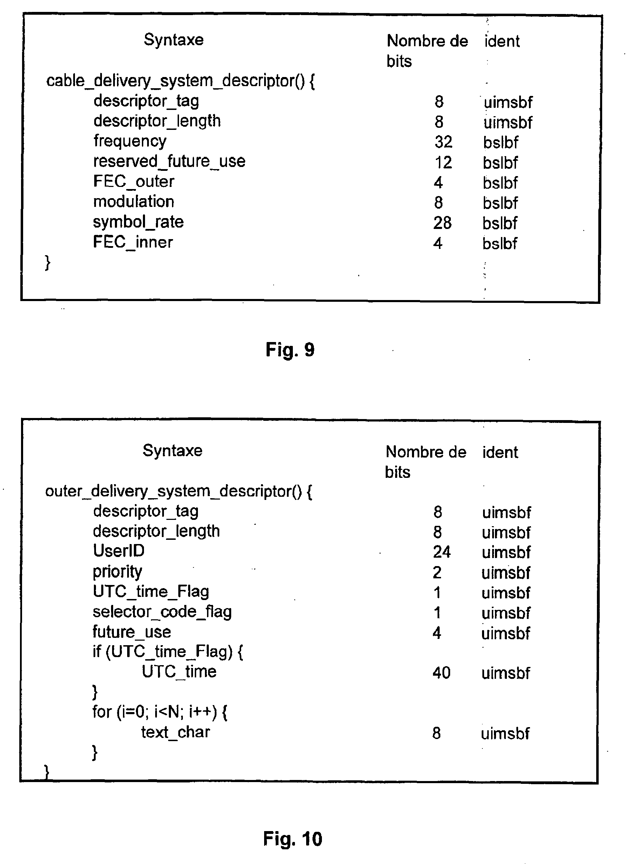

Une solution à ce problème est d'insérer dans la table un descripteur permettant d'indiquer par quel canal cette table est transmise au terminal. Par exemple, les NITs définies dans DVB contiennent un descripteur permettant de décrire le système de diffusion des services (Delivery System Descriptor). Un exemple d'un tel descripteur tel que défini par DVB est donné Fig. 9. Ce descripteur décrit le système de diffusion par câble. Il est donc possible de créer des descripteurs permettant d'identifier le canal de transmission des tables complémentaires inspirés des descripteurs de systèmes de diffusion. Un tel descripteur est inséré dans la table et permet au terminal de déterminer l'origine de la table. Il est donc possible de bâtir des descripteurs spécifiques d'un mode de transmission de la table comme par exemple un « local_delivery_system_descriptor », un « sim_delivery_descriptor » ou encore un « rfid_delivery_system-descriptor ». Il est également possible de créer un descripteur général permettant de décrire le canal de transmission des tables. Un exemple d'un tel descripteur est donné Fig. 10. Ce descripteur « outer_delivery_system_descriptor » permet d'identifier l'origine de la table. Dans ce descripteur, le champ « UserID » permet d'identifier l'opérateur gérant la table. Le champ « priority » permet de gérer des priorités lors de la gestion de conflit entre versions de tables décrivant les mêmcs services et transmises via des canaux différents. Le champ UTCtime permet d'indiquer la validité de la table dans le temps. La chaîne de caractère permet de coder un code identifiant le canal et appelé « selector_code ». Ce peut être par exemple un code de trois lettres pouvant prendre les valeurs : « SIM » pour une table transmise par la carte SIM, « USB » pour une table transmise via un périphérique USB, « BTH » pour une table transmise via une liaison bluetooth ou encore « RFI » pour une table transmise par le mécanisme RFID. Grâce à un tel descripteur présent dans la table, il est possible pour 1c terminal de déterminer le moyen de transfert à l'aide du code sélecteur et de connaître son fournisseur, ou son créateur à l'aide du user-ID.

Pour revenir à la situation illustrée Fig. 11, le terminal recevant la table de description du réseau 3 via l'un des opérateurs classique ope1 ou ope2 et ayant déjà une table obtenue via la carte SIM décrivant ce même réseau 3 pourra décider de privilégier la table transmise par l'opérateur de téléphonie via la carte SIM ou encore de prendre en compte les deux tables.

Dans un mode de réalisation de l'invention, un opérateur comme TPS ou Orange n'est pas forcément l'opérateur destinataire de ce descripteur mais par exemple un magasin (Carrefour). L'identificateur de réseau (Network ID) étant limité à 16 bits, seuls 65536 opérateurs peuvent être référencés. De plus, cet opérateur peut être le fournisseur des NIT_other, car c'est son métier de base, à un ou plusieurs clients, clients vu comme des opérateurs virtuels. A noter également que l'utilisation du Network ID doit être soumis à réglementation, processus long, coûteux et limité en nombre pour des clients qui souhaitent monter un réseau clé en main, les business cases en seraient limités. L'identificateur utilisateur (User ID) servira à identifier avec l'identificateur réseau un client ou opérateur virtuel unique sur par exemple 24 bits (16 777 215 clients). Dans un autre mode de réalisation, cet identificateur utilisateur permet également de répondre à la problématique où la table NIT_other est fournie par un même opérateur. L'identificateur utilisateur permet, si le descripteur est présent, de savoir si la version a vraiment évoluée entre deux NIT à destination d'un identificateur utilisateur et un identificateur réseau identique. le descripteur "userID", s'il est présent, permet de s'assurer que deux tables NIT se différenciant par leur numéro de version proviennent bien de la même source, et sont donc une évolution l'une de l'autre.

Le terminal peut également tenir compte du paramètre de priorité « priority » contenu dans le descripteur de la table obtenue via la carte SIM pour prendre une décision sur le temps d'utilisation de cette table. Dans un mode de réalisation de l'invention, le champ priorité peut par exemple indiquer au terminal que la table doit, dès à présent, être confrontée au manager SI/PSI et qu'il doit proposer immédiatement de nouveaux services à l'utilisateur. Le terminal peut alors faire apparaître une interface graphique demandant à l'utilisateur s'il souhaite avoir accès à ce service. D'autres modes de réalisation de l'invention peuvent prévoir des variantes d'utilisation de ce paramètre de priorité.

Dans la situation illustrée Fig. 12, la table complémentaire est obtenue via le mécanisme RFID. Dans cc cas, il est plausible de considérer que les informations les plus pertinentes sont celles transmises directement en local via le canal RFID et de privilégier cette table complémentaire, ceci peut être fait grâce au champ priorité. Dans ce cas, par exemple, la décision peut être de ne pas tenir compte de la table transmise de manière classique dans le flux par un des deux opérateurs. Il est également possible de prendre en compte les informations contenues dans les deux tables.

Dans un autre mode réalisation, une initialisation est effectuée à l'achat d'un terminal. Afin de faire bénéficier l'utilisateur de son terminal sans attendre, une NIT_other présente par défaut est utilisée par l'applicatif TV depuis un fichier XML de configuration disponible dans le terminal. Ceci permet de l'apparier à son opérateur final et donc à sa SIM.

Dans un autre mode de réalisation, le descripteur peut aider le terminal à identifier là durée d'utilisation d'une table donnée. En effet, le descripteur possède un champ UTC (Universal Time Coordinate). C'est en quelque sorte une date de péremption.

Les différents modes de réalisation décrits peuvent se combiner. Ainsi, un terminal peut disposer de plusieurs moyens de communication complémentaires susceptibles de permettre la transmission de tables complémentaires. On peut très facilement prévoir un téléphone doté de moyens de réception de télévision numérique terrestre conforme à DVB-H, qui sera donc doté d'une carte SIM, mais aussi d'un port USB, d'un port pour carte mémoire flash, voire d'un lecteur compatible RFID et connectable à un ordinateur via une liaison Bluetooth. Un tel terminal pourrait recevoir des tables complémentaires par tous ces canaux et gérer celles-ci selon leurs provenances, leurs priorités et leurs dates de validité.

Un terminal simple pourrait ne posséder que des moyens de gérer des tables complémentaires et ne pas gérer les tables incluses dans le flux. Dans un mode de réalisation de cette invention, un flux transport n'aurait pas besoin de transmettre les tables SI/PSI sur le canal DVB-T/H, mais seulement via un moyen annexe comme une puce RFID. Par exemple, la société du Louvre proposerait à ses visiteurs d'acheter cette puce afin d'avoir accès à la description des tableaux et expositions du musé. Le musée gagnerait ainsi considérablement en bande passante, de l'ordre de 15% sur le canal DVB-T/H.

L'invention ainsi décrite dans le cadre de DVB, peut également s'utiliser dans tout système de diffusion de services numériques prévoyant la transmission de tables de description des services diffusées par un canal dédié dans le flux que l'on peut compléter selon l'invention de tables de description complémentaires transmises au terminal par d'autres canaux.

De même, la description faite pour la NIT s'adapte immédiatement à tous types de tables de signalisation transmises dans le flux.

## Revendications

1. Procédé de gestion d'une offre de services numériques au sein d'un terminal de réception de services numériques diffusés via des flux de données numériques, ledit flux de données numériques comprenant un canal dédié de diffusion de tables de description de services offerts, ces services décrits pouvant être diffusés au sein dudit flux ou au sein d'autres flux diffusés, comportant les étapes suivantes :
- une étape de réception d'au moins une table complémentaire de description de services offerts reçue via un canal complémentaire différent dudit canal dédié de diffusion de tables de description de services offerts ;
- une étape de construction de la liste des services offerts incluant des informations contenues dans ladite table complémentaire de description de services offerts.

2. Procédé selon la revendication 1 comprenant en outre une étape de réception d'au moins une table de description de services offerts reçue par le canal dédié où l'étape de construction de la liste des services offerts inclut des informations contenues dans cette table et des informations contenues dans ladite table complémentaire de description de services offerts.

3. Procédé selon l'une quelconque des revendications 1 ou 2 où le canal complémentaire comprend un canal du flux dédié au transfert de données.

4. Procédé selon l'une quelconque des revendications 1 ou 2 où le canal complémentaire comprend un canal de données d'un réseau de téléphonie mobile.

5. Procédé selon l'une quelconque des revendications 1 ou 2 où le canal complémentaire comprend un périphérique de stockage de données connecté au terminal.

6. Procédé selon l'une quelconque des revendications 1 ou 2 où le canal complémentaire comprend un canal de connexion point à point avec un autre appareil.

7. Procédé selon l'une quelconque des revendications 1 ou 2 où le canal complémentaire comprend la lecture de ladite table complémentaire au sein d'un marqueur extérieur par un dispositif lecteur incorporé et/ou connecté au terminal.

8. Terminal de réception de services numériques diffusés via des flux de données numériques comportant :
- des moyens de réception desdits flux de données numériques, ces flux comprenant un canal dédié à la transmission de tables de description de services offerts, ces services offerts décrits pouvant être diffusés au sein dudit flux ou au sein d'autres flux diffusés,
- des moyens de construire, à partir de tables de description de services offerts, une liste des services offerts ;
**caractérisé en ce que** :
- il comporte en outre des moyens de recevoir, via un canal différent dudit canal dédié compris dans le flux, des tables complémentaires de description de services offerts, et
- les moyens de construire une liste des services offerts sont adaptés pour utiliser lesdites tables complémentaires.

9. Système de diffusion de services numériques via des flux de données numériques à destination d'un terminal de réception de services numériques, lesdits flux de données numériques comprenant un canal dédié à la transmission de tables de description des services offerts, ces services décrits pouvant être diffusés au sein dudit flux ou au sein d'autres flux diffusés **caractérisé, en ce qu'**il comprend en outre :
des moyens de transmettre à destination dudit terminal de réception de services numériques des tables complémentaires de description de services offerts via un canal différent du canal dédié à la transmission de tables de description.

10. Table de description de services numériques diffusés via des flux de données numériques, destinée à être interprétée par un terminal de réception de services numériques, **caractérisée en ce qu'**elle contient une information relative au canal de transmission utilisé pour sa transmission au terminal de réception.

11. Table de description de services numériques selon la revendication 11 comprenant en outre un identifiant utilisateur (UserID) permettant d'identifier l'opérateur gérant la table.
